# EUROPÄISCHE PATENTSCHRIFT

(11) **EP 0 456 007 B1**
(45) Veröffentlichungstag und Bekanntmachung des Hinweises auf die Patenterteilung: **07.02.1996**
(21) Anmeldenummer: 91105944.2
(22) Anmeldetag: 14.04.1991
(51) Int. Cl.: E01F 9/011, F21V 21/22, G09F 13/02, B60Q 7/00, G08B 5/00

(54) **Vorrichtung zum Anbringen und Ausrichten von Verkehrseinrichtungen, einschliesslich Verkehrszeichen, und/oder Beleuchtungseinrichtungen an Verkehrsflächen**
Device for mounting and adjusting traffic signs or signals and/or illumination means for traffic areas
Dispositif pour installation et adaptation des moyens de signalisation et/ou des moyens d'illumination routières

(30) Priorität: 19.04.1990 DE 4012459
(43) Veröffentlichungstag der Anmeldung: 13.11.1991
(73) Patentinhaber: Horizont Gerätewerk GmbH, D-34497 Korbach (DE)
(72) Erfinder: Sailer, Konrad, W-3540 Korbach (DE); Schaller, Heinrich, W-3544 Waldeck (DE)
(74) Vertreter: Dr. Fuchs, Dr. Luderschmidt Dr. Mehler, Dipl.-Ing Weiss Patentanwälte

(56) Entgegenhaltungen:
- EP-A- 0 135 756
- DE-A- 1 534 581
- DE-U- 8 528 823
- GB-A- 2 067 236
- US-A- 4 083 033

## Beschreibung

Die Erfindung betrifft eine Vorrichtung zum Anbringen und Ausrichten von Verkehrseinrichtungen, einschließlich Verkehrszeichen sowie Warnleuchten, und/oder Beleuchtungseinrichtungen an Verkehrsflächen, beispielsweise für die Absicherung des Verkehrs an Bau- oder Gefahrenstellen, wobei die eigentliche Verkehrseinrichtung und/oder Beleuchtungseinrichtung als Funktionsteil auf einem an der Verkehrsfläche anzubringenden bzw. aufzustellenden Basisteil getragen ist.

Verkehrseinrichtungen und Beleuchtungseinrichtungen solcher Art sind in verschiedensten Ausführungen und mit den verschiedensten Informationsgehalten bekannt, beispielsweise als Verkehrszeichen, Wegweiser, Vorwegweiser, Verkehrslenkungstafeln, Absperrschranken, Absperrtafeln usw.. Solche Verkehrseinrichtungen und Verkehrszeichen sind zumeist ständig an Verkehrsflächen, beispielsweise Straßen angebracht. Sie werden jedoch auch für zeitweilige Anbringung an Baustellen und besonderen Gefahrenstellen benötigt, sowohl bei den ständig angebrachten Verkehrseinrichtungen als auch bei den zeitweilig anzubringenden Verkehrseinrichtungen sind Beleuchtungs- und Warneinrichtungen bekannt, die das Erkennen der jeweiligen Verkehrseinrichtungen bei Dunkelheit erleichtern und die Aufmerksamkeit der Verkehrsteilnehmer besser auf die jeweiligen Verkehrseinrichtungen lenken sollen.

Als eine besondere Gruppe solcher Verkehrs- und Beleuchtungseinrichtungen sind Warnleuchten bekannt, die insbesondere an Gefahrenstellen und Baustellen sowohl tagsüber als auch nachts eingesetzt werden. Solche Warnleuchten sind vielfach für kurzfristigen und schnellen Einsatz, beispielsweise an Unfallstellen usw. bekannt. So sind bei einer bekannten Ausführung, das die optischen Einrichtungen enthaltende Funktionsteil und das die elektrischen Versorgungseinrichtungen und Schalteinrichtungen enthaltende Basisteil zu einer festen Einheit einer Warnleuchte miteinander verbunden, die in Kraftfahrzeugen der Polizei, Feuerwehr, Technischen Hilfswerk usw. mitgeführt und bei Unfällen oder Sondereinsätzen unmittelbar aus dem Fahrzeug geholt und zur Absicherung eingesetzt wird.

Zur besseren Warnwirkung kommt vorwiegend Blitzlicht oder Halogenlicht zur Anwendung. Wegen der beschränkten Platzverhältnisse im Kraftfahrzeug müssen solche Warnleuchten möglichst klein und kompakt gehalten werden. Im Einsatzfall werden diese Warnleuchten auf die Verkehrsfläche, beispielsweise auf die Straße gestellt und auf den ankommenden Verkehr ausgerichtet. Die Lichtpunkthöhe ist wegen der notwendigen kompakten Bauweise solcher Warnleuchten sehr niedrig, was den Mangel bedingt, daß allenfalls das erste Fahrzeug die Leuchte wahrnehmen kann, wogegen die nächsten und alle weiteren Fahrzeugführer die Leuchte nicht mehr direkt wahrnehmen können, also die Warnwirkung nicht mehr vorhanden oder unsicher ist.

In einer anderen bekannten Ausführung der oben genannten Warnleuchten ist es insbesondere für den Einsatz an Baustellen bekannt, das Funktionsteil und das Basisteil der Warnleuchte als zwei getrennte Einheiten auszubilden, wobei das Funktionsteil auf einem Absperrungsteil, beispielsweise auf einer Bake oder Absperrschranke aufgesetzt und das Basisteil am Fuß des Absperrungsteiles abgestellt wird. Es erstreckt sich dann lediglich ein Verbindungskabel vom Basisteil zum Funktionsteil der Warnleuchte. Warnleuchten dieser Ausführung eignen sich aber nur bedingt zum Mitführen in Einsatzfahrzeugen der Polizei, Feuerwehr usw. und zum Einsatz von Fall zu Fall bei Unfällen oder Sondereinsätzen, weil die solche Absperrungsteile tragenden Montageteile hierfür zu sperrig sind.

Aufgabe der Erfindung ist es daher, eine Vorrichtung zum Anbringen und Ausrichten von Verkehrseinrichtungen, einschließlich Verkehrszeichen sowie Warnleuchten und/oder Beleuchtungseinrichtungen an Verkehrsflächen zu schaffen, die einerseits kompakte Bauweise haben, um in Einsatzfahrzeugen der Polizei, Feuerwehr usw. mitgeführt zu werden und andererseits die Möglichkeit schaffen, solche Verkehrseinrichtungen oder Beleuchtungseinrichtungen schnell und einfach ohne nennenswerten Personalbedarf aufbauen zu können und zugleich das den jeweiligen Informations- und Warnungsgehalt aufweisende Funktionsteil stufenlos in wirksamer Position, beispielsweise in geeigneter Sichthöhe des Fahrers von Kraftfahrzeugen anzubringen, insbesondere wenn solche Kraftfahrzeuge in einer Fahrzeugschlange herankommen.

Man hat sich zwar bemüht, Möglichkeiten dafür zu schaffen, daß Verkehrseinrichtungen, insbesondere auch Warnleuchten an Gefahrenstellen oder Baustellen oder Unfallstellen in gut sichtbarer Position angebracht werden können. Beispielsweise hat man hierzu die bekannten kompakten Warnleuchten auf Leitkegeln oder speziellen Warndreiecken aufgesetzt. Diese Bemühungen haben aber bisher keine brauchbare Lösung des Problems erbracht, weil solche Untersatzteile ebenfalls im Einsatzfahrzeug mitgeführt und erst noch aufgestellt werden müßten und auch nur sehr bedingt eine brauchbare Positionierung des die Information und die Warnung abgebenden Funktionsteils ermöglicht. Schließlich bieten solche Basisteile auch nur eine relativ unsichere Aufstellungsweise und benötigen außerdem erhebliche Zeit für Montage und Aufstellung.

Aus der DE-U-85 28 823 ist eine Warnleuchte mit einem Oberteil zur Aufnahme der Optik und einem Unterteil zur Aufnahme der Stromversorgung bekannt, bei der zwischen Ober- und Unterteil ein Scherengetriebe angeordnet ist. Diese Warnleuchte wird im zusammengedrückten Zustand des Scherengetriebes transportiert, so daß sie beim Transport in ihren Abmessungen nicht wesentlich größer ist als die üblichen Warnleuchten. Am Einsatzort wird das Oberteil mit der Lichtquelle mit Hilfe des Scherengetriebes ausgezogen, so daß die Lichtquelle in wirksamer Position über der Fahrbahndecke positioniert werden kann. Nachteilig bei dieser bekannten Warnleuchte ist jedoch, daß das Scherengetriebe keine ausreichende Steifigkeit aufweist und so, beispielsweise durch Wind, die Lichtquelle hin- und herpendeln kann. Als weiterer wesentlicher Nachteil kann das Scherengetriebe bei dieser bekannten Warnleuchte nur in ein- oder ausgefahrener Stellung arretiert werden, bzw. an dazwischenliegenden, fest vorgegebenen Rastpunkten, so daß kein stufenloses Verstellen des Oberteils bezüglich des Unterteils möglich ist.

Es ist ferner aus der EP-A-0 135 756 eine Warnblinkleuchte bekannt, die ein gegenüber einem Unterteil höhenverstellbares Oberteil aufweist, wobei die Verstellung der Höhenlage durch Teleskope erfolgt, die im zusammengeschobenen Zustand im Unterteil untergebracht sind. Die Teleskope sind dabei derart ausgebildet, daß sie zur arretierten Festlegung im ausgefahrenen Zustand von einer Sperrklinke gehalten werden. Die Sperrklinke rastet auf einer Schulter des unteren Teleskops ein, wobei eine Schulter des oberen Teleskops die Schulter des unteren Teleskops untergreift. Als wesentlicher Nachteil bei dieser Warnblinkleuchte ist anzusehen, daß ein stufenloses Verstellen des Oberteils gegenüber dem Unterteil ebenfalls nicht möglich ist, da aufgrund dieser Ausgestaltung die Teleskope nur in eingefahrener oder ausgefahrener Stellung arretierbar sind.

Zur Lösung der gestellten Aufgabe schlägt die Erfindung demgegenüber vor, daß zwischen dem Basisteil und dem Funktionsteil der Verkehrseinrichtung bzw. Beleuchtungseinrichtung die bewegliche und veränderbare Verbindungseinrichtung in Art einer Teleskopstange vorgesehen ist. Zwischen den die Teleskopstange bildenden, ineinanderlaufenden Teleskopgliedern sind Reibungselemente in Form von Ringen aus gummielastischern Material derart eingelegt, daß die Teleskopglieder axial zueinander bewegbar, aber für das Abtragen der Last des Funktionsteils ausreichend fest in eingestellter gegenseitiger Stellung gehalten sind, so daß das Funktionsteil wählbar in gewünschter Position gegenüber dem Basisteil einstellbar ist, wobei die Reibungselemente zwischen den jeweils benachbarten Teleskopgliedern der Teleskopstange abrollbar sind.

Die Erfindung bietet eine besonders vorteilhafte Montageweise für die ständig oder langzeitig angebrachten Verkehrseinrichtungen einschließlich Verkehrszeichen und Beleuchtungseinrichtungen an Verkehrsflächen. Besonderen Vorteil bietet jedoch die Erfindung für zeitweilig einzusetzende Verkehrseinrichtungen und Beleuchtungseinrichtungen insbesondere für Warnleuchten.

Insbesondere wird durch die Erfindung eine zeitweise an Gefahrenstellen, Baustellen, Unfallstellen usw. aufstellbare Warnleuchte geschaffen, die ohne besonderen Raumbedarf in Einsatzfahrzeugen mitgeführt werden kann. Hierzu soll gemäß der Erfindung das Basisteil in Art eines an der jeweiligen Verkehrsfläche aufzustellenden Fußteiles ausgebildet sein und die für die Versorgung der eventuell in oder am Funktionsteil angebrachten elektrischen Einrichtungen erforderlichen Stromversorgungseinrichtungen und Schalteinrichtungen enthalten. An der Einsatzstelle ist eine solche Einheit mit dem als Fußteil ausgebildeten Basisteil aufzustellen, während mittels der beweglichen und veränderbaren Verbindungseinrichtung das Funktionsteil in geeignete Position gebracht wird. Diese Arbeiten sind einfach, schnell und von einer einzigen Person ausführbar.

Für zeitweise aufstellbare Verkehrs- und Beleuchungseinrichtungen, insbesondere Warnleuchten kann im Rahmen der Erfindung das Funktionsteil optische Einrichtungen in Art eines auf den ankommenden Verkehr auszurichtenden lichtbündelnden Scheinwerfers enthalten, dessen Strahlungsrichtung im wesentlichen parallel zur Verkehrsfläche eingestellt oder einstellbar ist. Dies bedeutet, daß das Funktionsteil bis etwa in Fahrerhöhe einstellbar ist und der von ihm ausgehende Lichtstrahl im wesentlichen in gleichbleibender Höhe entlang der Verkehrsfläche, beispielsweise einer Straße, gerichtet ist. Eine solche Warnleuchte ist dadurch entlang einer Fahrbahn und durch die Scheiben der Fahrzeuge hindurch für die Fahrer einer Mehrzahl von in einer Schlange hintereinander ankommender Fahrzeuge sicher erkennbar.

Bevorzugt sind die Teleskopglieder der Teleskopstange konzentrisch zusammenpassende Rohrstücke, die sämtlich gleiche Länge aufweisen, derart, daß die Teleskopstange auf die Länge eines einzigen Teleskopgliedes zusammenschiebbar ist. Hierdurch wird im Beispiel einer Warnleuchte erreicht, daß die Teleskopstange in zusammengeschobenem Zustand so niedrig ist, daß die Bauhöhe der bisherigen Warnleuchten-Einheiten nicht überschritten wird. Auch die sonstigen Abmessungen, wie Länge und Breite der Warnleuchte sind bei zusammengeschobener Teleskopstange nicht größer als diejenigen der bisherigen Warnleuchten-Einheiten. Hierdurch paßt die erfindungsgemäße Warnleuchte in dieser Ausführungsform in die in Einsatzfahrzeugen vorhandenen Aufnahmeboxen.

Durch die zusammenschiebbare Teleskopstange bietet die erfindungsgemäße Vorrichtung auch die Möglichkeit, andere Verkehrseinrichtungen und Beleuchtungseinrichtungen in Einsatzfahrzeugen mitzuführen, da die schildförmigen Verkehrszeichen, Baken, Schranken und Tafeln wegen ihrer flachen Ausbildung in Fahrzeugen nur wenig Platz beanspruchen und anstelle der bisherigen sperrigen Montagegestelle eine Mehrzahl von zusammengeschobenen Teleskopstangen leicht mitgeführt werden können.

Für das Aufstellen von Absperrschranken und größeren Absperrtafeln können zwei oder mehr Teleskopstangen benutzt werden, was den Vorteil bietet, daß auch beim Aufstellen an abschüssigen Stellen, beispielsweise Straßenböschungen, Höhenunterschiede ausgeglichen werden können und horizontale Anordnung von Schranken usw. leicht erreicht werden kann.

Herkömmliche Teleskopstangen sind für die Montage von Verkehrs- und Beleuchtungseinrichtungen nicht benutzbar weil erst durch den erfindungsgemäßen Einbau der Arretiervorrichtungen bzw. Reibungselemente zwischen den Teleskopglieden der Teleskopstange die Voraussetzung für die vollständige Zusammenführung der Teleskopstange auf die Größe eines einzigen Teleskopgliedes geschaffen worden sind. Als besonders einfache und überraschende Möglichkeit für die Ausbildung der Reibungselemente hat sich im Rahmen der Erfindung ergeben, daß die Teleskopglieder der Teleskopstange abgerundete Querschnittsform aufweisen und die Reibungselemente Ringe mit kreisrundem Querschnitt sind. Erleichtertes Abrollen der ringförmigen Reibungselemente läßt sich erreichen, wenn der Ring an seinem Ringumfang Bereiche größerer Dicke und Bereiche geringerer Dicke in einer im wesentlichen gleichmäßigen Abstandsverteilung aufweist. Die Bereiche größerer Dicke können dabei im wesentlichen kugelförmig ausgebildet sein.

Dazu können in besonders vorteilhafter Ausführung der Erfindung die Teleskopglieder der Teleskopstange Rohrstücke sein, die an einem Ende - vorzugsweise dem unteren - einen vorstehenden Wulst oder Rand mit einer sich zum Rohrstück hin anschließenden Nut und am anderen Ende einen abgesetzten Abschnitt mit gegenüber dem Rohrstück reduziertem Außen- und Innendurchmesser aufweisen, derart, daß der vorstehende Wulst oder Rand noch in den nächstgrößeren Rohrstück, nicht aber in dessen abgesetzten Abschnitt gleiten kann. Der zwischen den beiden Rohrstücken eingesetzte elastische Ring wird in dieser Ausführung der Erfindung vor der Montage der Teleskopstange in die Ringnut eingelegt. Das jeweils kleinere Rohrstück wird dann in das nächstgrößere Rohrstück eingeführt, kann so weit durchgeschoben werden, bis der elastische Ring an den am Beginn des abgesetzten Abschnittes gebildeten Absatz zum Anschlag kommt. Beim Ineinanderschieben der Rohrstücke tritt der elastische Ring aus der Ringnut heraus und wird zwischen der Innenfläche des größeren Rohrstückes und der Außenfläche des kleineren Rohrstückes beim Bewegungsvorgang so gepreßt, daß eine Kraft notwendig ist, um die Rohrstücke gegeneinander axial zu bewegen. Hierdurch wird jegliche ungewollte Beweglichkeit zwischen den Rohrstücken in der Teleskopstange vermieden, mit dem Resultat, daß die Teleskopstange in jeder beliebigen Auszieh-Höhe selbsttätig stehen bleibt und auch nicht wackelt. Es ist somit eine selbsttätige Arretierung der Rohrstücke der Teleskopstange in jeder beliebigen Position gegeben. Die eingelegten gummielastischen Ringe sorgen in jeglicher Stellung der Teleskopstange für ausreichende Reibung der Rohrstücke gegeneinander, nicht allein in axialer, sondern auch in radialer Richtung, so daß auch ein ausreichender Verdrehungsschutz gegenüber zufälligen Drehbewegungen gegeben ist.

Falls erwünscht, kann der Verdrehungsschutz dadurch verstärkt werden, daß anstelle von kreisrundem Querschnitt der Rohrstücke eine unrunde aber immerhin ausgerundete, beispielsweise elliptische Querschnittsform gewählt werden. Es ist auch denkbar, daß die einzelnen Teleskopglieder der Teleskopstange axial verlaufende Profilierungen in Art einer Nut- und Feder-Kombination aufweisen, die ineinander laufen.

Es kann auch wünschenswert sein, die Teleskopglieder der Teleskopstange nur in der Endposition gegeneinander zu arretieren. Hierzu können die Rohrstücke kurz unterhalb der Endposition durch Vergrößerung des Innendurchmessers geringfügig erweitert ausgebildet sein. Beim Zusammenschieben der Teleskopstange wird dann der gummielastische Ring hier entlastet. Es tritt keine Reibung mehr auf, und die Rohrstücke fallen praktisch zusammen. Es muß dann keine Kraft mehr aufgewendet werden. Umgekehrt muß beim Auseinanderziehen der Teleskopstange nur in einem mehr oder weniger langen Bereich vor der Endposition Kraft aufgewendet werden.

Die erfindungsgemäße Verkehrseinrichtung wird für den Benutzer dann besonders vorteilhaft, wenn durch abwechselndes Einfärben der Teleskopglieder der Teleskopstange in Weiß und Rot der gleiche optische Effekt erzielt wird wie bei einem Leitkegel. In diesem Fall erfüllt die Warnleuchte eine doppelte Funktion: Leuchte + Leitkegel.

Da das die Information oder Warnung abgebende Funktionsteil mehr oder weniger hoch über dem Basisteil einstellbar ist, empfehlen sich im Rahmen der Erfindung besondere Maßnahmen zur Erhöhung der Standfestigkeit. Hierzu können erfindungsgemäß nach außen bewegbare Füße zur Vergrößerung der Standfläche am Basisteil vorgesehen sein. Beispielsweise können solche Füße im Bodenbereich des Basisteiles auswärts schwenkbar oder ausziehbar angebracht sein.

Für verschiedene Einsatzarten kann es zweckmäßig sein, verschiedene Funktionsteile optischer oder sonstiger Art einzusetzen, beispielsweise einen Rundstrahler anstelle eines Richtstrahlers bei einer Warnleuchte.

Erfindungsgemäß kann daher die Warnleuchte mit auswechselbaren Leuchtenoberteilen ausgerüstet sein. Dies wird dadurch ermöglicht, daß das die Lichtquelle und die optischen Einrichtungen enthaltende Funktionsteil abnehmbar und/oder auswechselbar an der beweglichen und veränderbaren Verbindungseinrichtung angebracht ist.

Es kann auch wünchenswert sein, eine Verkehrs- oder Beleuchtungseinrichtung insbesondere Warnleuchte, für besondere Einsätze in ihren kompakten Zustand, d.h. mit zusammengeschobener Verbindungseinrichtung zwischen Funktionsteil und Basisteil zu benutzen. Es empfiehlt sich daher, im Rahmen der Erfindung das Funktionsteil, das Basisteil und/oder die Verbindungseinrichtung mit das Ausziehen der Verbindungseinrichtung verhindernden Arretiereinrichtungen zu versehen, die durch Verdrehen des Funktionsteiles gegenüber dem Basisteil in und aus der Arretierstellung einstellbar sind. Schließlich ist es im Rahmen der Erfindung von besonderem Vorteil, das Einschalten und Ausschalten der Warnleuchte so einfach wie möglich zu gestalten. Hierzu kann ein Schalter vorgesehen sein, der durch Drehbewegung des Funktionsteils gegenüber dem Basisteil und/oder der Verbindungseinrichtung zum Einschalten und Ausschalten der Leuchte betätigbar ist.

Ausführungsbeispiele der Erfindung werden im folgenden anhand der Zeichnung näher erläutert. Es zeigen:
Figur 1 zum Vergleich eine Warnleuchte herkömmlicher Ausführung in perspektivischer Darstellung;
Figur 2 eine Ausführungsform der erfindungsgemäßen Vorrichtung an einer Warnleuchte in perspektivischen Darstellungen bei ausgezogener und zusammengeschobener Verbindungseinrichtung;
Figur 3 einen axialen Schnitt durch eine im Beispiel nach Figur 2 als Verbindungseinrichtung benutzte Teleskopstange;
Figur 4 den Bereich B der Figur 3 in vergrößertem Maßstab;
Figur 5 den Bereich B der Figur 3 bei vollständig gegeneinander ausgezogenen Teleskopgliedern der Teleskopstange;
Figur 6 den Bereich B der Figur 3 in etwas abgewandelter Ausführungsform;
Figur 7 den Bereich B der Figur 3 in einer weiteren etwas abgewandelten Ausführungsform;
Figur 8 eine abgewandelte Ausführung des als Reibungselement eingesetzten gummielastischen Ringes;
Figur 9 einen Ausschnitt aus der Telskopstange gemäß Figur 3 etwas abgewandelter Ausführung in axialem Schnitt;
Figur 10 eine vergrößerte Darstellung des Teilbereiches C von Figur 9;
Figur 11 einen Schnitt A-A des vergrößert dargestellten Teilbereiches der Figur 10;
Figur 12 eine mit der erfindungsgemäßen Vorrichtung aufgestellte Absperrschranke;
Figur 13 eine mit Beleuchtungseinrichtung ausgestattete Verkehrstafel in Seitenansicht und

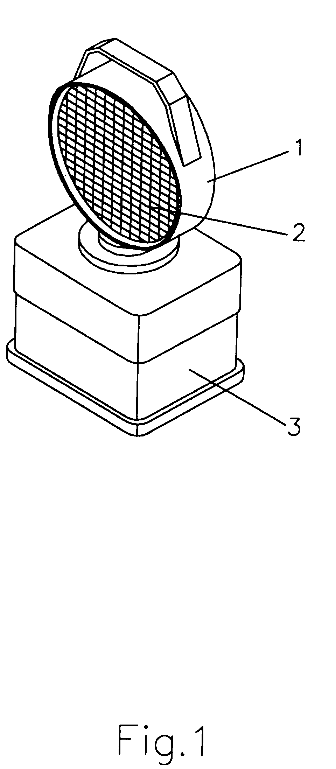

Die in Figur 1 zum Vergleich dargestellte Warnleuchte ist herkömmlicher Ausführung. Sie weist einen Funktionsteil 1 mit einer hier nicht sichtbaren Lichtquelle z.B. einer Glühlampe oder einer Blitzröhre auf, die sich im Brennpunkt einer lichtbündelnden optischen Einrichtung 2 befindet. Fest verbunden mit dem Funktionsteil 1 ist das Basisteil 3, welches eine Stromversorgungseinrichtung z.B. Batterien oder Akkumulatoren und eine elektrische oder elektronische Schaltung enthält. Diese bekannte Warnleuchte gemäß Figur 1 wird im Einsatzfall als Einheit auf die Straße gestellt und warnt im entgegenkommenden dichten Verkehr eigentlich nur den Fahrer eines ersten Fahrzeugs, während sie für die Fahrer dicht nachfolgender Fahrzeuge nicht sichtbar ist.

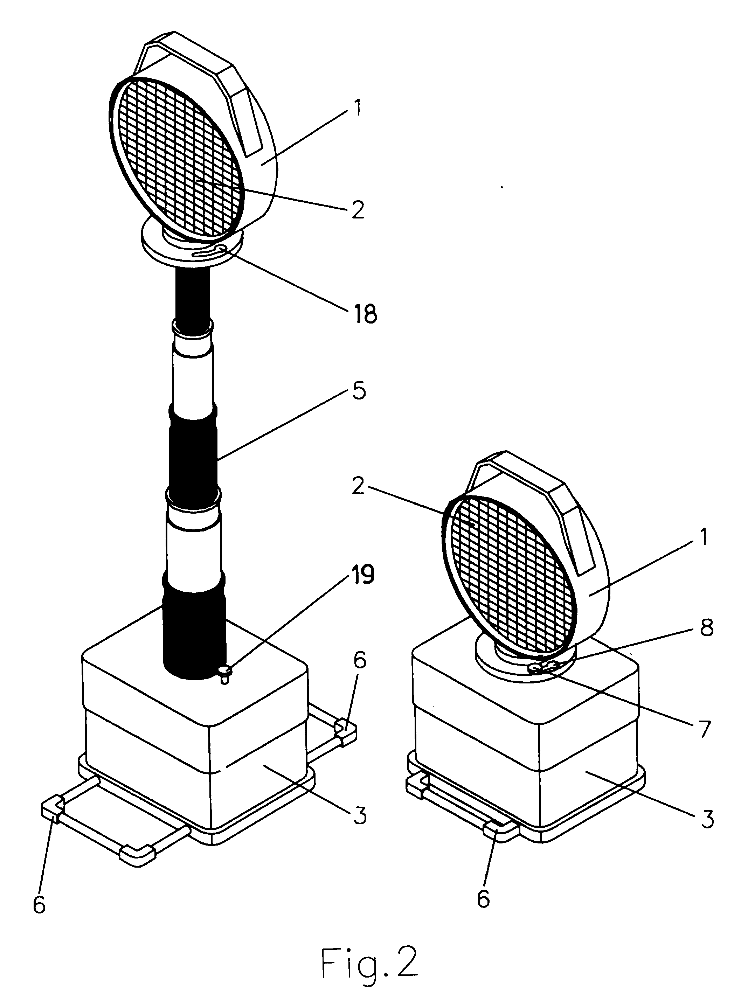

Bei der in Figur 2 gezeigten Warnleuchte sind wiederum ein Funktionsteil 1 mit in Art eines Scheinwerfers lichtbündelnder optischer Einrichtung 2 und einem Basisteil 3 vorgesehen. Gegenüber der Warnleuchte gemäß Figur 1 ist eine Verbindungseinrichtung zwischen dem Funktionsteil 1 und dem Basisteil 3 angebracht, durch welche das Funktionsteil 1 gegenüber dem aufgestellten Basisteil in der Höhe einstellbar ist. Die Strahlungsrichtung des Scheinwerfers ist in einer im wesentlichen parallel zur Verkehrsfläche verlaufenden Strahlungsrichtung in gewünschter Höhenposition einstellbar. Die seitliche Einstellung der Strahlungsrichtung entlang einer Straße oder dergleichen erfolgt durch entsprechendes Aufstellen der Warnleuchte mit ihrem als Leuchtenfuß ausgebildeten Basisteil.

Die bewegliche Verbindungseinrichtung enthält zwischen dem Funktionsteil 1 und dem Basisteil 3, einen in seiner Länge verstellbaren Träger für das Funktionsteil 1, der in Art einer Teleskopstange 5 ausgebildet ist. Das Basisteil 3 weist ausziehbare Füße 6 auf, die die Standfestigkeit der Warnleuchte erhöhen. Anstelle der ausziehbaren Füße 6 könnten auch in den Gehäuse-Eckbereichen des Basisteiles 3 ausschwenkbare Hebel als zusätzliche Füße vorgesehen sein. Am Funktionsteil 1 und an der Gehäuse-Oberseite des Basisteiles 3 sind Teile 18 und 19 einer Arretiervorrichtung vorgesehen, die sich durch Verdrehen des Funktionsteiles 1 gegenüber dem Basisteil 3 derart festsetzen lassen, daß die Teleskopstange 5 nicht ausgezogen werden kann.

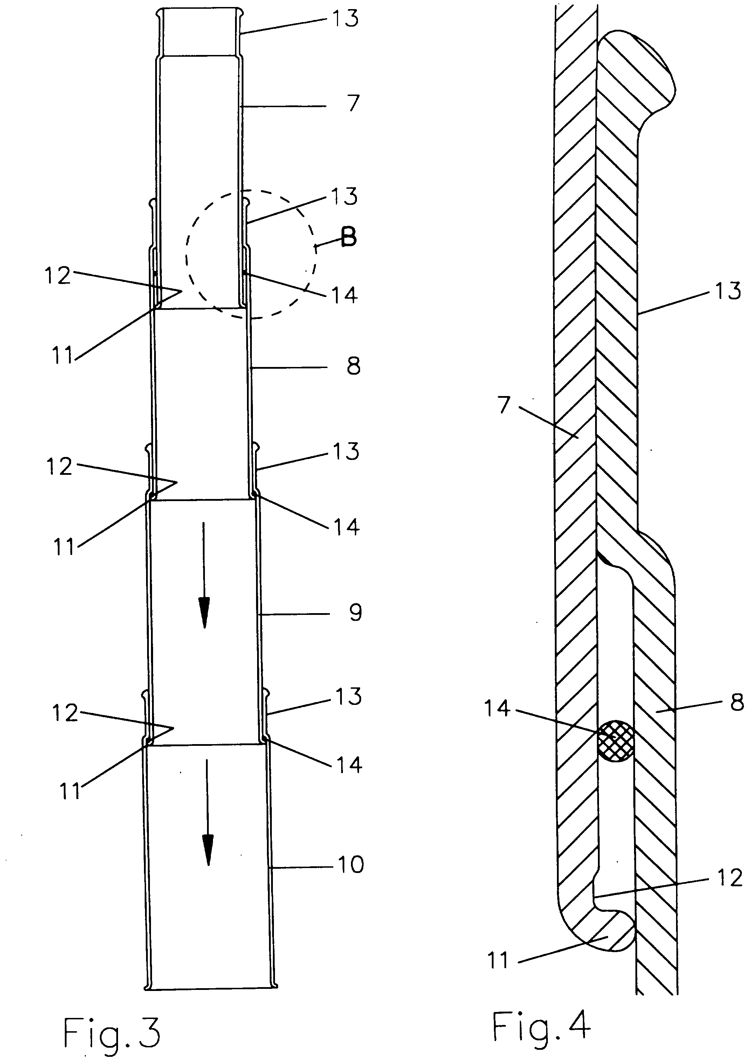

Figur 3 zeigt einen Schnitt durch die Teleskopstange 5 in einer bevorzugten Ausführung. Die Teleskopstange 5 ist in diesem Beispiel aus gleichlangen rohrförmigen Teleskopgliedern 7, 8, 9, 10 zusammengesetzt, die runden Querschnitt aufweisen können. Die Teleskopglieder 7, 8, 9, 10 haben verschiedene Durchmesser derart, daß sie ineinander angeordnet sein können. Sie sind ferner so geformt, daß an einem Ende - vorzugsweise dem unteren - ein vorstehender Wulst 11 oder Rand mit einer sich zum Rohr anschließenden Ringnut 12 und am anderen Ende ein abgesetzter Teilabschnitt 13 mit gegenüber dem Rohr reduzierten Außen- und Innendurchmesser vorgesehen ist. Der Außendurchmesser des vorstehenden Wulstes 11 ist derart, daß er noch im Rohrstück des nächstgrößeren Teleskopgliedes gleiten kann. Ferner ist ein gummielastischer Ring 14, beispielsweise aus Kautschuk oder Kunststoff vorgesehen, der vor der Montage der Teleskopstange 5 in die Ringnut 12 jedes Teleskopgliedes 7, 8, 9, 10 eingelegt wird, wonach das jeweilige Teleskopglied mit dem jeweils nächstkleineren Durchmesser zusammen mit dem Ring 14 so in das nächstgrößere Teleskopglied eingeführt und durchgeschoben wird, bis der Ring an dem durch den Teilabschnitt 13 gebildeten Absatz zum Anschlag kommt. Beim Ineinanderschieben der Teleskopglieder 7, 8, 9, 10 der Teleskopstange 5 werden die gummielastischen Ringe 14 aus ihrer jeweiligen Ringnut 12 herausbewegt und zwischen der Innenfläche des jeweils größeren und der Außenfläche des jeweils kleineren rohrförmigen Teleskopgliedes der Teleskopstange 5 beim Bewegungsvorgang so gepreßt und abgerollt, daß eine Kraft notwendig ist, um die Teleskopglieder 7, 8, 9, 10 gegeneinander zu bewegen. Die Teleskopstange 5 bleibt in jeder beliebigen Ausziehhöhe stehen und neigt auch nicht zum gegenseitigen Wackeln ihrer Teleskopglieder 7, 8, 9, 10.

Bei dem in Figur 4 gezeigten vergrößerten Ausschnitt aus Figur 3 befinden sich die dort beispielsweise gezeigten Teleskopglieder 7 und 8 der Teleskopstange 5 in einer Zwischenposition. Der gummielastische Ring 14 ist zwischen den beiden Teleskopgliedern 7 und 8, gepreßt und erzeugt eine ausreichende Reibung um die Teleskopglieder 7 und 8 in gegenseitiger Position zu halten. Ferner bildet der Ring 14 eine Dichtung zwischen den Teleskopgliedern 7 und 8.

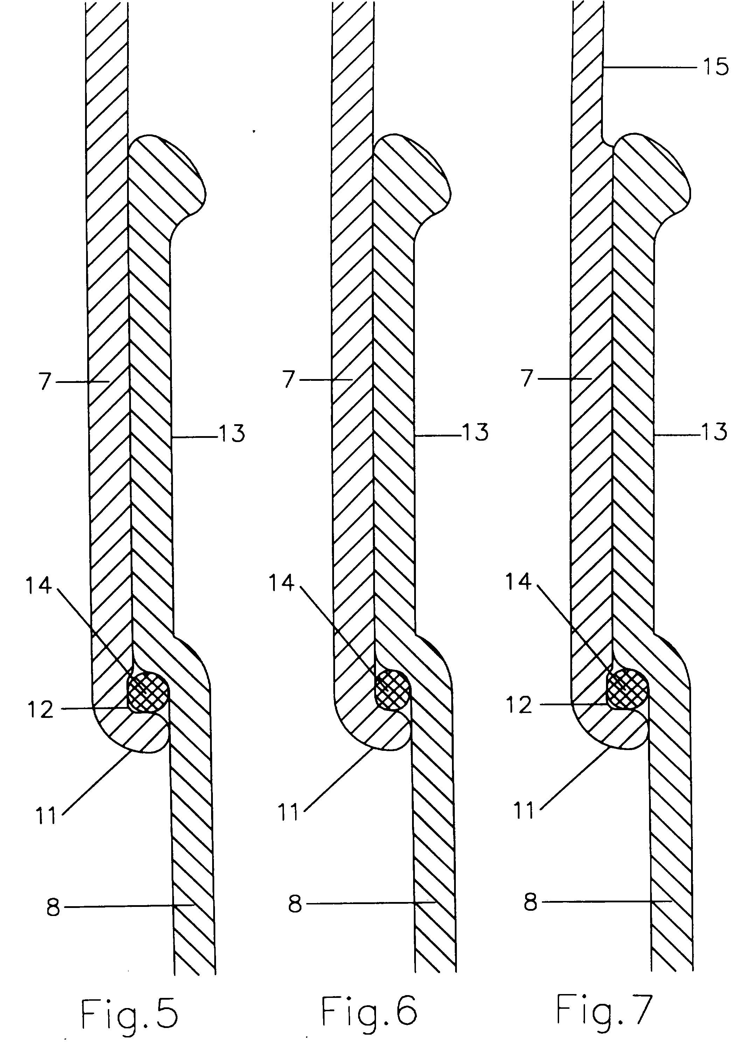

Bei der in Figur 5 gezeigten oberen Endpositon (Anschlag) der Teleskopglieder 7 und 8, ist der Ring 14 in die Ringnut 12 eingesprungen, wodurch sich eine Art von Verrastung in der Endpostion ergibt. Die vom Ring 14 erzeugte Reibung ist aber immer noch ausreichend groß, um die Teleskopglieder 7 und 8 in dieser Position zu halten, also gegeneinander zu arretieren. Auch ist in dieser oberen Endposition noch die volle Abdichtung zwischen den Rohrstücken 7 und 8 durch den Ring 14 gewährleistet.

In der abgewandelten Ausführung gemäß Figur 6, sind die Teleskopglieder 7, 8, 9 und 10 derart ausgebildet, daß von dem unteren Wulst 11 direkt in die Rohrform übergegangen ist, ohne die Bildung einer Ringnut oberhalb des Wulstes 11. In dieser Ausführung ist der Ring 14 auch in der oberen Endposition der Teleskopglieder noch unter voller Pressung, so daß die Arretierung der Teleskopglieder 7, 8, 9, 10 in ihre Endposition noch sicherer sein dürfte. Jedoch ist die Einführung der jeweilig dünneren Rohre in die dickeren Rohre, also die Montage der Teleskopstange 5, schwieriger.

Bei der in Figur 7 gezeigten abgewandelten Ausführung sind die rohrförmigen Teleskopglieder 7, 8, 9, 10 im oberen Teil ihres rohrförmigen Hauptabschnittes mit einem kleineren Außendurchmesser 15 versehen. Hierdurch klemmt der Ring 14 nicht mehr, wenn er bei der Teleskopbewegung nach unten in diesen Bereich kleineren Außendurchmessers kommt. Die Teleskopglieder 7, 8, 9, 10 können praktisch zusammenfallen, wenn der gummielastische Ring 14 in den Bereich kleineren Außendurchmessers gelangt. Außerdem kann das Ausziehen der Teleskopstange 5 praktisch kraftlos erfolgen, solange der gummielastische Ring 14 sich in diesem Bereich mit vermindertem Außendurchmesser 15 befindet. Andererseits ist die Teleskopstange 5 dann nicht mehr über ihre gesamte Ausziehlänge in jeder Ausziehposition arretiert.

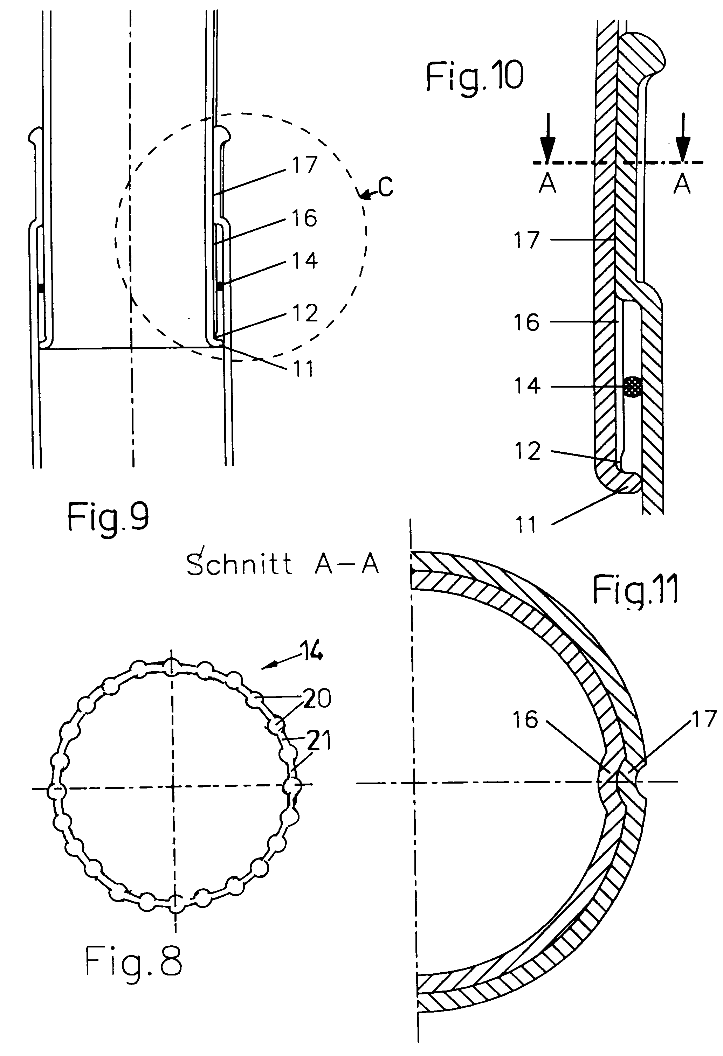

Figur 8 zeigt eine abgewandelte Ausführung des als Reibungselement eingesetzten gummielastischen Ringes 14. In dieser Ausführungsform hat der Ring 14 in einer im wesentlichen gleichmäßigen Abstandsverteilung an seinem Umfang verteilt, kugelförmig verdickte Bereiche 20 und dazwischen Bereiche 21 geringerer Dicke. Diese Bereiche geringerer Dicke haben jedoch ebenfalls kreisrunden Querschnitt. In dieser Ausführung ist der Ring 14 leichter zwischen zwei benachbarten Teleskopgliedern 7, 8, 9, 10 der Teleskopstange 5 beweglich und zwar auch bei niedrigeren Temperaturen.

Die Figuren 9 bis 11 zeigen Teleskopeinzelheiten, wobei axiale Profilierungen in Art von Nut- und Federkombination vorhanden sind, und zwar in Form einer axialen Rille oder Nut 16 und einer axialen Rippe oder Feder 17. Diese Teile laufen bei axialer Relativbewegung der rohrförmigen Teleskopglieder 7, 8, 9, 10 der Teleskopstange 5 ineinander und verhindern, daß die Teleskopglieder 7, 8, 9, 10 gegeneinander verdreht werden können.

In der dargestellten Ausführungsform kann ein vereinfacht betätigbarer Schalter zum Einschalten und Ausschalten der Warnleuchte vorgesehen sein, der durch Verdrehen des Funktionsteiles 1 gegenüber der Verbindungseinrichtung und/oder dem Basisteil 3 betätigbar ist.

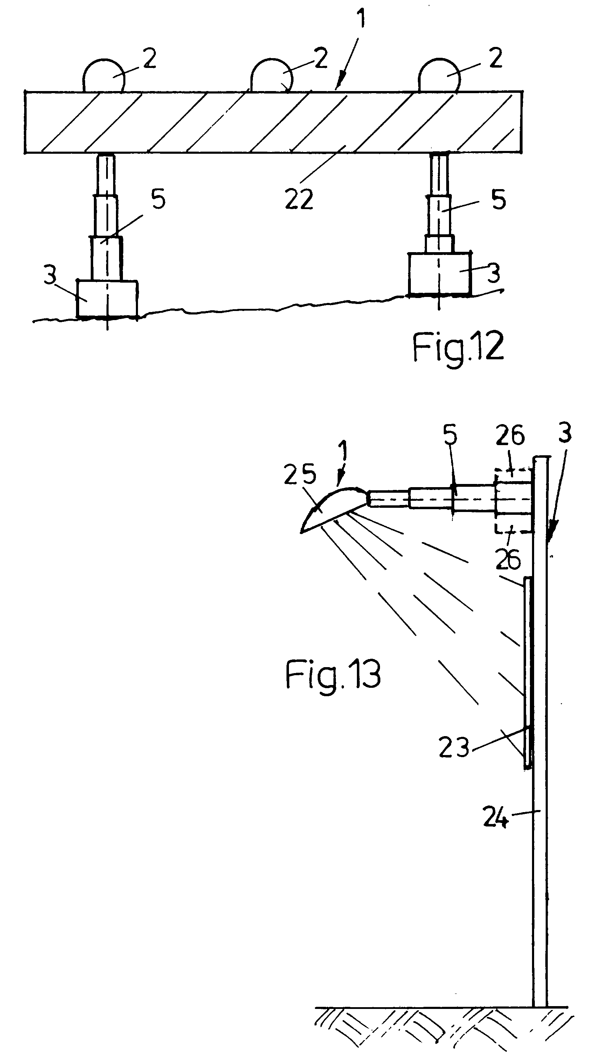

Während sich die Ausführungsbeispiele der Figuren 2 bis 11 auf Warnleuchten beziehen, zeigen die Figuren 12 bis 13 weitere Anwendungsmöglichkeit der Verbindungseinrichtung zwischen Funktionsteil 1 und Basisteil 3 in ihrer Ausführungsform als Teleskopstange 5.

Im Beispiel der Figur 12 ist der Funktionsteil 1 der Verkehrsvorrichtung ein Absperrbalken 22, der an seiner Oberseite mit einer Anzahl von optischen Einrichtungen 2 in Art von Warnleuchten besetzt sein kann. Zur Bildung der die Verkehrseinrichtung darstellenden Absperrschranke ist der Absperrbalken 1 auf zwei Teleskopstangen 5 angebracht. Jede dieser Teleskopstangen 5 sitzt auf einem Basisteil 3. Dabei können in den Basisteilen die für den Betrieb der optischen Einrichtungen 2 benötigten Stromversorgungseinrichtungen und Schalteinrichtungen untergebracht sein. Der Aufbau der Absperrschranke mit Absperrbalken 22 und Teleskopstangen 5 sowie Basisteilen 3 bietet den Vorteil, daß die Teleskopstangen 5 nicht allein eine gewünschte Höheneinstellung des Absperrbalkens 22 gestatten, sondern auch den Ausgleich von durch das Gelände bedingten Höhenunterschieden der Aufstellungsstellen. Der Absperrbalken 22 kann dadurch jederzeit horizontal ausgerichtet werden.

Im Beispiel der Figur 13 handelt es sich um eine Verkehrstafel 23, die mittels eines herkömmlichen Montagerüstes 24 bleibend oder zeitweilig an Verkehrsflächen aufgestellt ist. Oberhalb der Verkehrstafel 23 ist am Montagegerüst 24 eine Beleuchtungseinrichtung 25 oberhalb und vor der Verkehrstafel 23 angeordnet. Diese Beleuchtungseinrichtung 25 ist mittels einer Telekopstange 5 am Montagegerüst befestigt. Im Allgemeinen stellt das Montagegerüst 24 das gemeinsame Basisteil 3 für die Verkehrstafel 23 und die Beleuchtungseinrichtung 25 dar. Wie bei 26 gestrichelt angedeutet, kann zusätzlich jedoch ein weiteres Basisteil vorgesehen sein, das die Teleskopstange 5 trägt und die für die Beleuchtungseinrichtung 25 benötigten Stromversorgungseinrichtungen und Schalteinrichtungen enthält. Die Anbringung der Beleuchtungseinrichtung 25 mittels einer in diesem Fall horizontal angeordneten Teleskopstange 5 bietet den Vorteil, daß der Abstand der Beleuchtungseinrichtung 25 vor der Verkehrstafel 23 einstellbar ist und damit der Einfallswinkel der auf die Verkehrstafel 23 treffenden Lichtstrahlen. Dies ist von besonderer Bedeutung für Verkehrstafeln mit reflektierender Oberfläche. Durch die Einstellung des Abstandes der Beleuchtungseinrichtung 25 vor der Verkehrstafel 23 kann außer optimaler Ausleuchtung auch optimale Abstrahlrichtung des von der Verkehrstafel 23 reflektierten Lichtes bezüglich der sich an die Verkehrstafel heranbewegenden Verkehrsteilnehmer eingestellt werden.

Außer den oben erläuterten Beispielen ist eine große Anzahl weiterer Einsatzmöglichkeiten der beweglichen veränderbaren Verbindungseinrichtung an Verkehrseinrichtungen und im Verkehr einzusetzenden Beleuchtungseinrichtungen, insbesondere in deren Ausführungsform als Teleskopstange 5 möglich.

## Patentansprüche

1. Vorrichtung zum Anbringen und Ausrichten von Verkehrseinrichtungen, einschließlich Verkehrszeichen sowie Warnleuchten, und/oder Beleuchtungseinrichtungen an Verkehrsflächen, beispielsweise für die Absicherung des Verkehrs an Bau- und Gefahrenstellen, wobei die eigentliche Verkehrseinrichtung und/oder Beleuchtungeinrichtung als Funktionsteil (1) auf einem an der Verkehrsfläche anzubringenden bzw. aufzustellenden Basisteil (3) getragen ist, und zwischen dem Basisteil (3) und dem Funktionsteil (1) der Verkehrseinrichtung bzw. Beleuchtungseinrichtung eine bewegliche und veränderbare Verbindungseinrichtung vorgesehen ist,
dadurch gekennzeichnet,
daß die bewegliche Verbindungseinrichtung in Art einer Teleskopstange (5) ausgebildet ist und zwischen den die Teleskopstange (5) bildenden, ineinanderlaufenden Teleskopgliedern (7, 8, 9, 10) Reibungselemente in Form von Ringen (14) aus gummielastischem Material derart eingelegt sind, daß die Teleskopglieder axial zueinander bewegbar, aber für das Abtragen der Last des Funktionsteils (1) ausreichend fest in eingestellter gegenseitiger Stellung gehalten sind, so daß das Funktionsteil (1) wählbar in gewünschte Position gegenüber dem Basisteil (3) einstellbar ist, wobei die Reibungselemente zwischen den jeweils benachbarten Teleskopgliedern der Teleskopstange (5) abrollbar sind.

2. Vorrichtung nach Anspruch 1, dadurch gekennzeichnet, daß die Reibungselemente zugleich als zwischen den jeweils benachbarten Teleskopgliedern (7, 8, 9, 10) der Teleskopstange (5) wirksame elastische Dichtungselemente ausgebildet sind.

3. Vorrichtung nach Anspruch 1 oder 2, dadurch gekennzeichnet, daß die Teleskopglieder (7, 8, 9, 10) der Teleskopstange (5) konzentrisch zusammenpassende Rohrstücke sind, die sämtlich gleiche Länge aufweisen, derart, daß die Teleskopstange (5) auf die Länge eines einzigen Teleskopgliedes zusammenschiebbar ist.

4. Vorrichtung nach einem der Ansprüche 1 bis 3, dadurch gekennzeichnet, daß die Teleskopglieder (7, 8, 9, 10) der Teleskopstange (5) abgerundete Querschnittsform aufweisen und die Reibungselemente Ringe (14) mit kreisrundem Querschnitt sind.

5. Vorrichtung nach Anspruch 4, dadurch gekennzeichnet, daß der Ring (14) an seinem Ringumfang Bereiche (20) größerer Dicke und Bereiche (21) geringerer Dicke in einer im wesentlichen gleichmäßigen Abstandsverteilung aufweist.

6. Vorrichtung nach Anspruch 5, dadurch gekennzeichnet, daß die Bereiche (20) größerer Dicke im wesentlichen kugelförmig ausgebildet sind.

7. Vorrichtung nach Anspruch 4, dadurch gekennzeichnet, daß die Teleskopglieder (7, 8, 9, 10) der Teleskopstange (5) Rohrstücke sind, die an einem Ende - vorzugsweise dem unteren - einen vorstehenden Wulst (11) oder Rand mit einer sich zum Rohrstück hin anschließenden Nut (12) und am anderen Ende einen abgesetzten Abschnitt (15) mit gegenüber dem Rohrstück reduzierten Außen- und Innendurchmesser aufweisen, derart, daß der vorstehende Wulst (11) oder Rand noch in das Rohrstück des nächstgrößeren Teleskopgliedes, nicht aber in dessen abgesetzten Abschnitt (15) gleiten kann.

8. Vorrichtung nach einem der Ansprüche 1 bis 7, dadurch gekennzeichnet, daß ein endständiges Teleskopglied - vorzugsweise das äußerste (10) - der Teleskopstange (5) fest mit dem Gehäuse des Basisteils (3) verbunden ist.

9. Vorrichtung nach einem der Ansprüche 1 bis 8, dadurch gekennzeichnet, daß das Gehäuse des Basisteils (3) zur Aufnahme der zusammengeschobenen Teleskopstange (5) in seinen Inneren ausgebildet ist.

10. Vorrichtung nach einem der Ansprüche 1 bis 9, dadurch gekennzeichnet, daß die Teleskopglieder (7, 8, 9, 10) der Teleskopstange (5) gegen gegenseitiges Verdrehen um ihre Längsachse gesichert sind.

11. Vorrichtung nach Anspruch 10, dadurch gekennzeichnet, daß die Teleskopglieder (7, 8, 9, 10) der Teleskopstange (5) unrunde Querschnittsform haben.

12. Vorrichtung nach Anspruch 10, dadurch gekennzeichnet, daß die einzelnen Teleskopglieder (7, 8, 9, 10) der Teleskopstange (5) axial verlaufende Profilierungen (16, 17) in Art einer Nut- und Feder-Kombination aufweisen, die ineinander laufen.

13. Vorrichtung nach einem der Ansprüche 1 bis 12, dadurch gekennzeichnet, daß die Teleskopglieder (7, 8, 9, 10) der Teleskopstange (5) abwechselnd rot und weiß eingefärbt sind.

14. Vorrichtung nach einem der Ansprüche 1 bis 13 für zeitweise aufstellbare Verkehrs- und Beleuchtungseinrichtungen, beispielsweise Warnleuchten, dadurch gekennzeichnet, daß das Basisteil (3) in Art eines an der jeweiligen Verkehrsfläche aufzustellenden Fußteiles ausgebildet ist und die für die Versorgung der eventuell im oder am Funktionsteil (1) angebrachten elektrischen Einrichtungen erforderlichen Stromversorgungseinrichtungen und Schalteinrichtungen enthält.

15. Vorrichtung nach Anspruch 14, dadurch gekennzeichnet, daß das Funktionsteil (1) optische Einrichtungen (2) in Form eines auf den ankommenden Verkehr auszurichtenden, lichtbündelnden Scheinwerfers enthält, dessen Strahlungsrichtung im wesentlichen parallel zur Verkehrsfläche eingestellt oder einstellbar ist.

16. Vorrichtung nach Anspruch 14, dadurch gekennzeichnet, daß am Basisteil (3) nach außen bewegliche Füße (6) zur Vergrößerung der Standfläche vorgesehen sind.

17. Vorrichtung nach Anspruch 16, dadurch gekennzeichnet, daß die Füße (6) im Bodenbereich des Basisteils (3) auswärts schwenkbar oder ausziehbar angebracht sind.

18. Vorrichtung nach einem der Ansprüche 1-17, dadurch gekennzeichnet, daß das Funktionsteil (1) abnehmbar und /oder auswechselbar an der beweglichen und veränderbaren Verbindungseinrichtung angebracht ist.

19. Vorrichtung nach einem der Ansprüche 1 bis 18, dadurch gekennzeichnet, daß das Funktionsteil (1), das Basisteil (3) und/oder die Verbindungseinrichtung mit das Ausziehen der Verbindungseinrichtung verhindernden Arretierungseinrichtungen (18, 19) versehen sind, die durch Verdrehen des Funktionsteils gegenüber dem Basisteil in und aus der Arretierstellung einstellbar sind.

20. Vorrichtung nach einem der Ansprüche 1-19, dadurch gekennzeichnet, daß ein Schalter vorgesehen, der durch Drehbewegung des Funktionsteils (1) gegenüber dem Basisteil (3) und/oder der Verbindungseinrichtung zum Einschalten und Ausschalten der eventuell im Funktionsteil (1) enthaltenen elektrischen Einrichtungen betätigbar ist.

## Claims

1. Device for mounting and adjusting traffic devices, including traffic signs and warning lights, and/or illumination devices for traffic areas, for example for safeguarding traffic at construction sites and black spots, wherein the actual traffic device and/or illumination device is supported as functional part (1) on a base part (3) to be introduced or erected at the traffic area, and a movable and adjustable connection device is provided between base part (3) and functional part (1) of the traffic device or illumination device, characterised in that the movable connection device is designed like a telescope rod (5) and friction elements in the form of rings (14) made from resilient material are inserted between the telescope members (7, 8, 9, 10) running into one another and forming telescope rod (5) such that the telescope members can be moved axially with respect to one another, but are retained sufficiently firmly in an adjusted mutual position to ease the load of functional part (1), so that functional part (1) can be selectably adjusted to the required position with respect to base part (3), wherein the friction elements can be unrolled between the particular neighbouring telescope members of telescope rod (5).

2. Device according to claim 1, characterised in that the friction elements are also designed as effective resilient sealing elements between the particular neighbouring telescope members (7, 8, 9, 10) of telescope rod (5).

3. Device according to claim 1 or 2, characterised in that telescope members (7, 8, 9, 10) of telescope rod (5) are concentrically fitting pieces of tube all having the same length, such that telescope rod (5) can be compressed to the length of a single telescope member.

4. Device according to one of claims 1 to 3, characterised in that telescope members (7, 8, 9, 10) of telescope rod (5) have rounded cross-sectional shape and the friction elements are rings (14) of circular cross-section.

5. Device according to claim 4, characterised in that ring (14) has regions (20) of greater thickness and regions (21) of lower thickness with essentially equidistant distribution on its annular periphery.

6. Device according to claim 5, characterised in that regions (20) of greater thickness are designed to be essentially spherical.

7. Device according to claim 4, characterised in that telescope members (7, 8, 9, 10) of telescope rod (5) are pieces of tube which have at one end - preferably the lower - a projecting bead (11) or edge with a groove (12) connecting to the piece of tube and at the other end a recessed section (15) having reduced external and internal diameter with respect to the piece of tube, such that the projecting bead (11) or edge may still slide in the piece of tube of the next largest telescope member, but not in its recessed section (15).

8. Device according to one of claims 1 to 7, characterised in that a terminal telescope member - preferably the outermost (10) - of telescope rod (5) is firmly connected to the housing of base part (3).

9. Device according to one of claims 1 to 8, characterised in that the housing of base part (3) is designed to receive compressed telescope rod (5) in its interior.

10. Device according to one of claims 1 to 9, characterised in that telescope members (7, 8, 9, 10) of telescope rod (5) are secured against mutual rotation about their longitudinal axis.

11. Device according to claim 10, characterised in that telescope members (7, 8, 9, 10) of telescope rod (5) have non-round cross-sectional shape.

12. Device according to claim 10, characterised in that the individual telescope members (7, 8, 9, 10) of telescope rod (5) have axially extending profiles (16, 17) like a tongue and groove combination which run into one another.

13. Device according to one of claims 1 to 12, characterised in that telescope members (7, 8, 9, 10) of telescope rod (5) are coloured alternately red and white.

14. Device according to one of claims 1 to 13 for traffic and illumination devices, for example warning lights, which can be erected temporarily, characterised in that base part (3) is designed like a foot part to be erected at the particular traffic area and contains the current supply devices and switch devices required for supplying the electrical devices which may be introduced into or onto functional part (1).

15. Device according to claim 14, characterised in that functional part (1) contains optical devices (2) in the form of a light-bundling headlight to be adjusted to the oncoming traffic, the beam direction of which is adjusted or can be adjusted essentially parallel to the traffic area.

16. Device according to claim 14, characterised in that feet (6) which can be moved towards the outside are provided on base part (3) to increase the standing area.

17. Device according to claim 16, characterised in that feet (6) are introduced into the bottom region of base part (3) to be pivoted outwards or withdrawn.

18. Device according to one of claims 1-17, characterised in that functional part (1) is introduced to be removable and/or exchangeable on the movable and adjustable connection device.

19. Device according to one of claims 1 to 18, characterised in that functional part (1), base part (3) and/or the connection device are provided with locking devices (18, 19) preventing the withdrawal of the connection device which can be adjusted into and out of the locking position by rotating the functional part with respect to the base part.

20. Device according to one of claims 1-19, characterised in that a switch is provided which can be actuated by rotary movement of functional part (1) with respect to base part (3) and/or the connection device for switching on and switching off the electrical devices which may be present in functional part (1).

## Revendications

1. Dispositif pour installer et orienter des équipements pour la circulation, y compris des signaux routiers et des lampes de signalisation et d'avertissement, et/ou des systèmes d'éclairage dans des zones de circulation, par exemple pour la sécurité de la circulation à proximité des chantiers et des endroits dangereux, l'équipement pour la circulation et/ou le système d'éclairage proprement dit étant supporté en tant que partie fonctionnelle (1) sur un élément de base (3) à placer ou à installer dans la zone de circulation, et un dispositif de liaison mobile et modifiable étant prévu entre l'élément de base (3) et la partie fonctionnelle (1) de l'équipement pour la circulation ou du système d'éclairage,
caractérisé en ce que le dispositif de liaison mobile est réalisé sous la forme d'une tige télescopique (5), et entre les éléments télescopiques (7, 8, 9, 10) coulissant les uns dans les autres et constituant la tige télescopique (5), sont insérés des éléments de frottement sous la forme de bagues (14) à base de matériau en caoutchouc élastique de telle façon que les éléments télescopiques soient mobiles axialement les uns par rapport aux autres, mais soient maintenus suffisamment solidement dans la position réciproque réglée pour le support de la charge de la partie fonctionnelle (1), de sorte que la partie fonctionnelle (1) puisse être réglée au choix dans la position souhaitée par rapport à l'élément de base (3), les éléments de frottement pouvant être déroulés entre les éléments télescopiques respectivement voisins de la tige télescopique (5).

2. Dispositif selon la revendication 1, caractérisé en ce que les éléments de frottement sont réalisés en même temps comme des éléments d'étanchéité élastiques et agissant entre les éléments télescopiques (7, 8, 9, 10) respectivement voisins de la tige télescopique (5).

3. Dispositif selon la revendication 1 ou 2, caractérisé en ce que les éléments télescopiques (7, 8, 9, 10) de la tige télescopique (5) sont des tronçons de tubes adaptés de façon concentrique qui présentent tous la même longueur, de telle sorte que la tige télescopique (5) puisse être télescopée sur la longueur d'un seul élément télescopique.

4. Dispositif selon l'une quelconque des revendications 1 à 3, caractérisé en ce que les éléments télescopiques (7, 8, 9, 10) de la tige télescopique (5) présentent une forme de section arrondie et les éléments de frottement sont des bagues (14) de section circulaire.

5. Dispositif selon la revendication 4, caractérisé en ce que la bague (14) présente à sa périphérie des zones (20) d'épaisseur plus importante et des zones (21) d'épaisseur plus faible réparties à des intervalles sensiblement réguliers.

6. Dispositif selon la revendication 5, caractérisé en ce que les zones (20) d'épaisseur assez importante sont réalisées avec une forme pratiquement sphérique.

7. Dispositif selon la revendication 4, caractérisé en ce que les éléments télescopiques (7, 8, 9, 10) de la tige télescopique (5) sont des tronçons de tubes qui présentent à une extrémité, de préférence l'extrémité inférieure, un renflement (11) saillant ou un bord avec une rainure (12) faisant suite en direction du tronçon de tube et à l'autre extrémité un tronçon (15) en déport avec un diamètre extérieur et un diamètre intérieur réduits par rapport au bout de tuyau, de telle sorte que le renflement (11) saillant ou le bord puisse glisser encore dans le bout de tuyau de l'élément télescopique immédiatement supérieur, mais pas dans son tronçon (15) en déport.

8. Dispositif selon l'une quelconque des revendications 1 à 7, caractérisé en ce qu'un élément télescopique terminal, de préférence l'élément extrême (10), de la tige télescopique (5) est relié de façon fixe au corps de l'élément de base (3).

9. Dispositif selon l'une quelconque des revendications 1 à 8, caractérisé en ce que le corps de l'élément de base (3) est réalisé pour recevoir la tige télescopique (5) repliée dans sa partie intérieure.

10. Dispositif selon l'une quelconque des revendications 1 à 9, caractérisé en ce que les éléments télescopiques (7, 8, 9, 10) de la tige télescopique (5) sont protégés contre une torsion réciproque autour de leur axe longitudinal.

11. Dispositif selon la revendication 10, caractérisé en ce que les éléments télescopiques (7, 8, 9, 10) de la tige télescopique (5) ont une forme de section non circulaire.

12. Dispositif selon la revendication 10, caractérisé en ce que les différents éléments télescopiques (7, 8, 9, 10) de la tige télescopique (5) présentent des profilages (16, 17) s'étendant axialement sous la forme d'une combinaison de languettes et de rainures qui coulissent les unes dans les autres.

13. Dispositif selon l'une quelconque des revendications 1 à 12, caractérisé en ce que les éléments télescopiques (7, 8, 9, 10) de la tige télescopique (5) sont colorés alternativement en rouge et en blanc.

14. Dispositif selon l'une quelconque des revendications 1 à 13, pour des équipements de circulation et des systèmes d'éclairage pouvant être mis en place provisoirement, par exemple des lampes de signalisation, caractérisé en ce que l'élément de base (3) se présente sous la forme d'une partie avec pied à installer dans la zone de circulation respective et contient les dispositifs d'alimentation électrique et les dispositifs de commutation nécessaires pour l'alimentation des équipements électriques éventuellement installés dans ou sur la partie fonctionnelle (1).

15. Dispositif selon la revendication 14, caractérisé en ce que la partie fonctionnelle (1) contient des dispositifs optiques (2) sous la forme d'un projecteur à orienter vers le trafic d'arrivée et focalisant la lumière, dont le sens d'éclairage est réglé ou peut être réglé sensiblement parallèlement à la zone de circulation.

16. Dispositif selon la revendication 14, caractérisé en ce que sont prévus, sur l'élément de base (3), des pieds (6) mobiles vers l'extérieur pour agrandir la surface d'assise.

17. Dispositif selon la revendication 16, caractérisé en ce que les pieds (6) sont disposés de façon à pouvoir pivoter vers l'extérieur ou à être étirés à partir de la zone de fond de l'élément de base (3).

18. Dispositif selon l'une quelconque des revendications 1 à 17, caractérisé en ce que la partie fonctionnelle (1) est disposée de façon amovible et/ou interchangeable sur le dispositif de liaison mobile et modifiable.

19. Dispositif selon l'une quelconque des revendications 1 à 18, caractérisé en ce que la partie fonctionnelle (1), l'élément de base (3) et/ou le dispositif de liaison sont équipés de systèmes de blocage (18, 19) empêchant l'extraction du dispositif de liaison, qui peuvent être réglés par la rotation de la partie fonctionnelle par rapport à l'élément de base dans et à partir de la position d'arrêt.

20. Dispositif selon l'une quelconque des revendications 1 à 19, caractérisé en ce qu'est prévu un interrupteur qui peut être actionné par le mouvement de rotation de la partie fonctionnelle (1) par rapport à l'élément de base (3) et/ou du dispositif de liaison pour la connexion et la déconnexion des équipements électriques éventuellement contenus dans la partie fonctionnelle (1).
